# EUROPEAN PATENT SPECIFICATION

(11) **EP 3 770 932 B1**
(45) Date of publication and mention of the grant of the patent: **11.01.2023**
(21) Application number: 19211116.9
(22) Date of filing: 25.11.2019
(51) Int. Cl.: H01G 9/00, H01G 9/028, H01G 9/15

(54) **METHOD FOR MANUFACTURING SOLID ELECTROLYTE ALUMINUM ELECTROLYTIC CAPACITOR**
VERFAHREN ZUR HERSTELLUNG EINES FESTELEKTROLYT-ALUMINIUM-ELEKTROLYTKONDENSATORS
PROCÉDÉ DE FABRICATION D'UN CONDENSATEUR ÉLECTROLYTIQUE EN ALUMINIUM À ÉLECTROLYTE SOLIDE

(30) Priority: 22.07.2019 CN 201910663123
(43) Date of publication of application: 27.01.2021
(73) Proprietor: Capxon Electronic Technology Co., Ltd, Shenzhen, Guangdong (CN)
(72) Inventor: LIN, Yizhu, Shen Zhen, Guangdong 518132 (CN)
(74) Representative: Vitina, Maruta

(56) References cited:
- EP-A1- 1 100 097
- JP-A- 2001 307 958
- US-A1- 2003 133 256
- US-A1- 2011 096 466
- US-A1- 2014 098 467
- US-A1- 2015 183 925
- US-A1- 2016 225 531
- US-A1- 2019 148 080

## Description

### TECHNICAL FIELD

This application relates to the manufacture of capacitors, and more particularly to a method for manufacturing a solid aluminum electrolytic capacitor.

### BACKGROUND OF THE INVENTION

Solid aluminum electrolytic capacitor is a commonly-used electronic component in which a conductive polymer instead of a liquid electrolyte is applied. Compared to the liquid aluminum electrolytic capacitor, the solid aluminum electrolytic capacitor has a smaller ESR, a more stable frequency characteristic and a higher safety.

Chinese Patent Application Publication CN 103632846 A discloses a solid electrolytic capacitor, in which a valve metal substrate forming a dielectric oxide film on the surface of the anode is alternately impregnated in a monomer solution and an oxidizing agent solution to form a first conductive polymer layer on the surface of the dielectric oxide film. The impregnating time in the oxidizing agent solution is no more than 15 s. Then, the capacitor with the first conductive polymer layer is impregnated in a soluble conductive polymer solution or a conductive polymer dispersion to form a second conductive polymer layer with a film thickness of small deviation. Finally, a cathode layer is formed on the conductive polymer layer.

Chinese Patent Application Publication CN 103562260 A discloses a solid electrolytic capacitor which includes a highly-conductive polymer, an aqueous conductive polymer solution and a conductive polymer film. Besides, this publication also provides a solid electrolytic capacitor with a reduced ESR and a manufacturing method thereof. In the method, a dielectric layer is formed on the surface of the anode conductor containing a valve metal. Then, a first conductive polymer layer is formed on the surface of the dielectric layer by oxidatively or electrically polymerizing the corresponding monomer. The surface of the first conductive polymer layer is impregnated in the aqueous conductive polymer solution to form a second conductive polymer layer. Therefore, this method can ensure the uniformity of the conductive polymer layer of the capacitor.

In the above two publications, the soluble conductive polymer solution or the conductive polymer dispersion has a single composition. Compared to the small particles, it is more difficult for the large particles to enter the surface pores, resulting in an insufficient withdrawing of capacitance. In addition, insufficient impregnation will also lead to insufficient withdrawing of capacitance while excessive impregnation will result in a higher ESR and a great increase in cost. After the capacitor component is impregnated in the soluble conductive polymer solution or the conductive polymer dispersion and dried to form a film, a dense chemically-bonded film layer is not formed at the outermost conductive polymer layer, so that the film layer at the corner of the prepared capacitor is thin, at which the leakage current generally occurs, leading to a low yield rate.

Furthermore, an application EP1100097A1 discloses a process for producing a solid electrolytic capacitor, comprising: forming a first electrically conductive polymer layer of polymer of thiophene or derivative thereof on an oxide dielectric layer formed on a surface of an anode body of a valve metal; forming a second electrically conductive polymer layer of pyrrole, aniline or derivative thereof by chemical polymerization on said first layer; forming a third electrically conductive polymer layer of thiophene or derivative thereof on said second layer by chemical polymerization; and forming a fourth electrically conductive polymer layer on said third layer by electrolytic polymerization, with said first, second and third layers used as electrodes.

An application US20030133256A1 discloses a method for manufacturing a solid electrolytic capacitor, comprising: forming, in a first solution, a first conductive polymer film serving as a portion of the conductive polymer layer; and forming, in a second solution whose pH is lower than the pH of the first solution, a second conductive polymer film serving as another portion of the conductive polymer layer. The first conductive polymer film and the second conductive polymer film are both formed by electrolytic oxidative polymerization or by chemical oxidative polymerization.

An application US20190148080A1 discloses a method of producing an electrolytic capacitor, comprising: making a first conductive polymer having a thiophene skeleton adhere to an anode body on which a dielectric layer is formed by bringing a first treatment liquid containing the first conductive polymer into contact with the anode body; making a second conductive polymer having at least one of an aniline skeleton and a pyrrole skeleton adhere to the anode body to which the first conductive polymer adheres by bringing a second treatment liquid containing the second conductive polymer into contact with the anode body; and making a third conductive polymer having a thiophene skeleton adhere to the anode body to which the second conductive polymer adheres by bringing a third treatment liquid containing the third conductive polymer into contact with the anode body.

### SUMMARY OF THE INVENTION

An object of this application is to provide a method for manufacturing a solid aluminum electrolytic capacitor, in which the film thickness of the conductive polymer layers has a small deviation, and the capacitor has desirable withdrawing of capacitance and good ESR and tracking resistance.

According to the present invention, it is provided a method for manufacturing a solid aluminum electrolytic capacitor according to claim 1. Embodiments of the invention are set forth with the appended dependent claims.

The technical solutions of this application are described as follows.

This application provides a method for manufacturing a solid aluminum electrolytic capacitor, comprising:
cutting an anode aluminum foil to a desired width;
welding the cut anode aluminum foil to a stainless steel strip, and coating an insulating adhesive to partition an anode zone from a cathode zone;
forming the cut anode aluminum foil;
preparing a first conductive polymer layer on the formed anode aluminum foil by chemical polymerization, wherein the chemical polymerization comprises:
   impregnating the anode aluminum foil in a reducing solution for 0.3-3 min and drying the anode aluminum foil;
   impregnating the anode aluminum foil in an oxidizing solution for 0.3-3 min and drying the anode aluminum foil; and
   repeating the above steps 1-5 times;
   preparing a second conductive polymer layer by impregnation in a dispersion of small-size particles;
   preparing a third conductive polymer layer by impregnation in a dispersion of particles larger than those for the preparation of the second conductive layer;
   preparing a fourth conductive polymer layer by electrochemical polymerization;
   preparing a carbon paste layer and a silver paste layer on the anode aluminum foil; and
   subjecting the resulting product to stacking, packaging, aging and sorting.

In some embodiments, the first conductive polymer layer includes polypyrrole, polythiophene, polyaniline, derivatives and copolymers thereof.

In some embodiments, the reducing solution is composed of a monomer, a dopant and a solvent; the monomer is one compound selected from pyrrole, thiophene, aniline and derivatives thereof; the dopant is one compound selected from compounds having a sulfonic acid group and compounds having a carboxyl group; and a concentration of the dopant is 0.01-1 mol/L.

In some embodiments, the solvent of the reduction solution is water, an organic solvent or a mixture of water and the organic solvent. The organic solvent is one of methanol, ethanol, propanol and butanol.

In some embodiments, the oxidizing solution comprises an oxidizing agent; the oxidizing agent is one of ferric p-toluenesulfonate, ammonium persulfate, potassium permanganate, perchloric acid and hydrogen peroxide, and has a mass concentration of 0.5%-20%; a solvent of the oxidizing solution is water, an organic solvent or a mixture thereof; and the organic solvent is one of methanol, ethanol, propanol and butanol.

In some embodiments, the step of preparing the second conductive polymer layer by impregnation comprises:
impregnating the anode aluminum foil in a dispersion and drying the anode aluminum foil; and repeating the above steps 2-15 times;
where a solute of the dispersion is polypyrrole, polythiophene, polyaniline, a derivative or a copolymer thereof; and
suspended polymer particles in the dispersion have a particle size of less than 100 nm.

In some embodiments, the step of preparing the third conductive polymer layer by impregnation comprises:
impregnating the anode aluminum foil in a dispersion and drying the anode aluminum foil; and repeating the above steps 1-3 times;
where a solute of the dispersion is polypyrrole, polythiophene, polyaniline or a derivative thereof; and
suspended polymer particles have a particle size of less than 500 nm.

In some embodiments, the step of preparing the fourth conductive polymer layer by electrochemical polymerization comprises:
subjecting the anode aluminum foil to a constant current or voltage;
where the constant current for the electrochemical polymerization is 0.1-10 mA; the constant voltage for the electrochemical polymerization is 0.01-2.5 V; a time of the electrochemical polymerization is 1-200 min; and a temperature of a polymerizing solution is 4-30°C.

In some embodiments, the polymerizing solution is composed of a monomer, a dopant and a solvent;
where the monomer is pyrrole or thiophene, and has a mass percentage of 1-15%;
the dopant is a compound having a sulfonic acid group or a carboxyl group, or a derivative or a salt thereof, and has a concentration of 0.1-3 mol/L; and
the solvent is water, an organic solvent or a mixture thereof.

Compared with the prior art, this application employs four conductive polymer layers, where first conductive polymer layer is prepared by chemical polymerization; the second conductive polymer layer is prepared by impregnation in a dispersion of small-size particles; the third conductive polymer layer is prepared by impregnation in a dispersion of particles larger than those for the preparation of the second conductive layer; and the dense fourth conductive polymer layer is prepared by electrochemical polymerization. Based on the above, this application not only reduces the thickness of the capacitor bottom, but also improves the withdrawing of capacitance, ESR and the leakage current.

### BRIEF DESCRIPTION OF THE DRAWINGS

The technical solutions in the prior art or in embodiments of the invention will be more clearly described below with reference to the drawings. Obviously, described below are merely some embodiments of the invention, and various variations and modifications of the invention can be made by those skilled in the art without departing from the scope of the present invention as set forth with the appended claims.

Figure is a cross-sectional view of an anode aluminum foil of a solid aluminum electrolytic capacitor according to an embodiment of the invention.

### DETAILED DESCRIPTION OF EMBODIMENTS

In order to make the objects, technical solutions and advantages of the invention clearer, the invention will be further described below with reference to the drawings. It should be understood that these embodiments are merely illustrative of the invention, and are not intended to limit the invention.

In addition, the technical features involved in different embodiments may be combined as long as they are not mutually contradictory.

### EXAMPLE 1

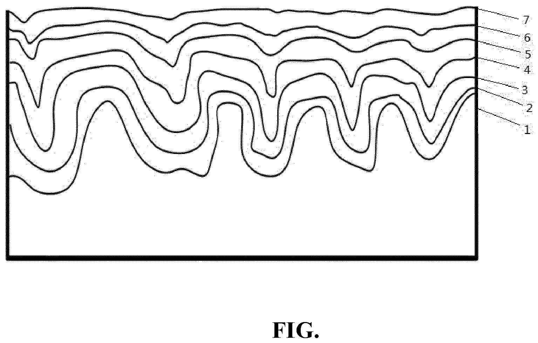

This embodiment provided a method for manufacturing a solid aluminum electrolytic capacitor (referring to the figure), which was specifically described as follows.

### S100)

An anode aluminum foil 1 was cut to a desired width.

### S200)

The cut anode aluminum foil 1 was welded to a stainless steel strip, and then an insulating adhesive was coated to partition an anode zone from a cathode zone.

### S300)

The cut anode aluminum foil 1 was formed.

### S400)

A first conductive polymer layer 2 was prepared on the anode aluminum foil 1 by chemical polymerization.

### S500)

A second conductive polymer layer 3 was prepared by impregnation.

### S600)

A third conductive polymer layer 4 was prepared by impregnation.

### S700)

A fourth conductive polymer layer 5 was prepared by electrochemical polymerization.

### S800)

A carbon paste layer 6 and a silver paste layer 7 were prepared on the anode aluminum foil 1.

### S900)

The resulting product was subjected to stacking, packaging, aging and sorting.

In step (S400), the chemical polymerization was performed as follows. The anode aluminum foil 1 was impregnated in a reducing solution for 1 min, dried at 50°C for 20 min and then impregnated in an oxidizing solution for 1 min. Such process was repeated twice.

The reducing solution consisted of a monomer, a dopant and a solvent, where the monomer was 5% by weight of thiophene; the dopant was 1 mol/L *p*-toluenesulfonic acid; and the solvent was a mixture of water and ethanol.

The oxidizing solution was 3% by weight of ammonium persulfate, in which a solvent was water.

In step (S500), the preparation of the second conductive polymer layer 3 by impregnation was performed as follows. The anode aluminum foil was impregnated in a dispersion and then dried at 110°C for 10 min, where a solute in the dispersion was 5% by weight of polythiophene having a particle size of less than 50 nm. Such process was repeated 4 times.

In step (S600), the preparation of the third conductive polymer layer 4 by impregnation was performed as follows. The anode aluminum foil was impregnated in a dispersion and then dried at 110°C for 15 min, where a solute in the dispersion was 3% by weight of polythiophene having a particle size of less than 200 nm. Such process was repeated 4 times.

In step (S700), the preparation of the fourth conductive polymer layer 5 by electrochemical polymerization was performed as follows. The anode aluminum foil was immersed in a polymerizing solution under a 3 mA constant current for 30 min, where a temperature of the polymerizing solution was 10°C. The polymerizing solution consisted of a monomer, a dopant and a solvent, where the monomer was 6% by weight of pyrrole; the dopant was 0.5 mol/L sodium *p*-toluenesulfonate; and the solvent was water.

### EXAMPLE 2

This embodiment provided a method for manufacturing a solid aluminum electrolytic capacitor (referring to the figure), which was specifically described as follows.

### S100)

An anode aluminum foil 1 was cut to a desired width.

### S200)

The cut anode aluminum foil 1 was welded to a stainless steel strip, and then an insulating adhesive was coated to partition an anode zone from a cathode zone.

### S300)

The cut anode aluminum foil 1 was formed.

### S400)

A first conductive polymer layer 2 was prepared on the anode aluminum foil 1 by chemical polymerization.

### S500)

A second conductive polymer layer 3 was prepared by impregnation.

### S600)

A third conductive polymer layer 4 was prepared by impregnation.

### S700)

A fourth conductive polymer layer 5 was prepared by electrochemical polymerization.

### S800)

A carbon paste layer 6 and a silver paste layer 7 were prepared on the anode aluminum foil 1.

### S900)

The resulting product was subjected to stacking, packaging, aging and sorting.

In step (S400), the chemical polymerization was performed as follows. The anode aluminum foil 1 was impregnated in a reducing solution for 2 min, dried at 100°C for 10 min and then impregnated in an oxidizing solution for 1 min. Such process was repeated 5 times.

The reducing solution consisted of a monomer, a dopant and a solvent, where the monomer was 3% by weight of pyrrole; the dopant was 1.5 mol/L *p*-toluenesulfonic acid; and the solvent was a mixture of water and ethanol.

The oxidizing solution was 3% by weight of ferric *p*-toluenesulfonate, in which a solvent was water.

In step (S500), the preparation of the second conductive polymer layer 3 by impregnation was performed as follows. The anode aluminum foil was impregnated in a dispersion and then dried at 110°C for 30 min, where a solute in the dispersion was 5% by weight of polyaniline having a particle size of less than 30 nm. Such process was repeated twice.

In step (S600), the preparation of the third conductive polymer layer 4 by impregnation was performed as follows. The anode aluminum foil was impregnated in a dispersion and then dried at 100°C for 10 min, where a solute in the dispersion was 5% by weight of polyaniline having a particle size of less than 200 nm. Such process was repeated twice.

In step (S700), the preparation of the fourth conductive polymer layer 5 by electrochemical polymerization was performed as follows. The anode aluminum foil was immersed in a polymerizing solution under a 1 mA constant current for 70 min, where a temperature of the polymerizing solution was 20°C. The polymerizing solution consisted of a monomer, a dopant and a solvent, where the monomer was 3% by weight of thiophene; the dopant was 1 mol/L sodium *p*-toluenesulfonate; and the solvent was water.

### EXAMPLE 3

This embodiment provided a method for manufacturing a solid aluminum electrolytic capacitor (referring to the figure), which was specifically described as follows.

### S100)

An anode aluminum foil 1 was cut to a desired width.

### S200)

The cut anode aluminum foil 1 was welded to a stainless steel strip, and then an insulating adhesive was coated to partition an anode zone from a cathode zone.

### S300)

The cut anode aluminum foil 1 was formed.

### S400)

A first conductive polymer layer 2 was prepared on the anode aluminum foil 1 by chemical polymerization.

### S500)

A second conductive polymer layer 3 was prepared by impregnation.

### S600)

A third conductive polymer layer 4 was prepared by impregnation.

### S700)

A fourth conductive polymer layer 5 was prepared by electrochemical polymerization.

### S800)

A carbon paste layer 6 and a silver paste layer 7 were prepared on the anode aluminum foil 1.

### S900)

The resulting product was subjected to stacking, packaging, aging and sorting.

In step (S400), the chemical polymerization was performed as follows. The anode aluminum foil 1 was impregnated in a reducing solution for 1 min, dried at 50°C for 20 min and then impregnated in an oxidizing solution for 1 min. Such process was repeated twice.

The reducing solution consisted of a monomer, a dopant and a solvent, where the monomer was 1% by weight of thiophene; the dopant was 1 mol/L *p*-toluenesulfonic acid; and the solvent was a mixture of water and ethanol.

The oxidizing solution was 3% by weight of ammonium persulfate, in which a solvent was water.

In step (S500), the preparation of the second conductive polymer layer 3 by impregnation was performed as follows. The anode aluminum foil was impregnated in a dispersion and then dried at 110°C for 10 min, where a solute in the dispersion was 5% by weight of polythiophene having a particle size of less than 50 nm. Such process was repeated 4 times.

In step (S600), the preparation of the third conductive polymer layer 4 by impregnation was performed as follows. The anode aluminum foil was impregnated in a dispersion and then dried at 140°C for 15 min, where a solute in the dispersion was 3% by weight of polythiophene having a particle size of less than 200 nm. Such process was repeated 4 times.

In step (S700), the preparation of the fourth conductive polymer layer 5 by electrochemical polymerization was performed as follows. The anode aluminum foil was immersed in a polymerizing solution under a 1 mA constant current for 70 min, where a temperature of the polymerizing solution was 20°C. The polymerizing solution consisted of a monomer, a dopant and a solvent, where the monomer was 3% by weight of thiophene; the dopant was 1 mol/L sodium *p*-toluenesulfonate; and the solvent was water.

### EXAMPLE 4

This embodiment provided a method for manufacturing a solid aluminum electrolytic capacitor (referring to the figure), which was specifically described as follows.

### S100)

An anode aluminum foil 1 was cut to a desired width.

### S200)

The cut anode aluminum foil 1 was welded to a stainless steel strip, and then an insulating adhesive was coated to partition an anode zone from a cathode zone.

### S300)

The cut anode aluminum foil 1 was formed.

### S400)

A first conductive polymer layer 2 was prepared on the anode aluminum foil 1 by chemical polymerization.

### S500)

A second conductive polymer layer 3 was prepared by impregnation.

### S600)

A third conductive polymer layer 4 was prepared by impregnation.

### S700)

A fourth conductive polymer layer 5 was prepared by electrochemical polymerization.

### S800)

A carbon paste layer 6 and a silver paste layer 7 were prepared on the anode aluminum foil 1.

### S900)

The resulting product was subjected to stacking, packaging, aging and sorting.

In step (S400), the first conductive polymer layer 2 comprises polypyrrole, polythiophene, polyaniline and derivatives and copolymers thereof; the chemical polymerization was performed as follows. The anode aluminum foil 1 was impregnated in a reducing solution for 0.3-3 min and dried, and then impregnated in an oxidizing solution for 0.3-3 min. Such process was repeated 1-5 times.

The reducing solution consisted of a monomer, a dopant and a solvent, where the monomer is one compound selected from pyrrole, thiophene, aniline and derivatives thereof; the dopant is one compound selected from compounds having a sulfonic acid group and compounds having a carboxyl group; and a concentration of the dopant is 0.01-1 mol/L. The solvent of the reducing solution is water, an organic solvent or a mixture thereof; and the organic solvent is one of methanol, ethanol, propanol and butanol.

The oxidizing solution comprises an oxidizing agent; the oxidizing agent is one of ferric *p*-toluenesulfonate, ammonium persulfate, potassium permanganate, perchloric acid and hydrogen peroxide, and has a mass concentration of 0.5%-20%; a solvent of the oxidizing solution is water, an organic solvent or a mixture thereof; and the organic solvent is one of methanol, ethanol, propanol and butanol.

In step (S500), the preparation of the second conductive polymer layer 3 by impregnation was performed as follows. The anode aluminum foil was impregnated in a dispersion and then dried, where a solute of the dispersion is polypyrrole, polythiophene, polyaniline, a derivative or a copolymer thereof; and suspended polymer particles in the dispersion have a particle size of less than 100 nm. Such process was repeated 2-15 times.

In step (S600), the preparation of the third conductive polymer layer 4 by impregnation was performed as follows. The anode aluminum foil was impregnated in a dispersion and then dried, where a solute of the dispersion is polypyrrole, polythiophene, polyaniline or a derivative thereof; and suspended polymer particles have a particle size of less than 500 nm. Such process was repeated 1-3 times.

In step (S700), the preparation of the fourth conductive polymer layer 5 by electrochemical polymerization was performed as follows. The anode aluminum foil was immersed in a polymerizing solution under a 0.1-10 mA constant current or a 0.01-2.5 V constant voltage for 1-200 min, where a temperature of the polymerizing solution was 4-30°C. The polymerizing solution is composed of a monomer, a dopant and a solvent; where the monomer is pyrrole or thiophene, and has a mass percentage of 1-15%; the dopant is a compound having a sulfonic acid group or a carboxyl group, or a derivative or a salt thereof, and has a concentration of 0.1-3 mol/L; and the solvent is water, an organic solvent or a mixture thereof.

In summary, the invention employs four conductive polymer layers on the anode aluminum foil 1, where first conductive polymer layer 2 is prepared by chemical polymerization; the second conductive polymer layer 3 is prepared by impregnation in a dispersion of small-size particles; the third conductive polymer layer 4 is prepared by impregnation in a dispersion of particles larger than those for the preparation of the second conductive layer 3; and the dense fourth conductive polymer layer 5 is prepared by electrochemical polymerization. Based on the above, the invention not only reduces the thickness of the capacitor bottom, but also improves the withdrawing of capacitance, ESR and the leakage current, providing a better cost-effective capacitor with a stronger market competitiveness.

Obviously, the above embodiments are merely illustrative of the invention, and are not intended to limit the invention. as set forth with the appended claims.

## Claims

1. A method for manufacturing a solid aluminum electrolytic capacitor, comprising:
cutting an anode aluminum foil (1) to a width;
welding the cut anode aluminum foil (1) to a stainless steel strip, and coating an insulating adhesive to partition an anode zone from a cathode zone;
forming the cut anode aluminum foil (1);
preparing a first conductive polymer layer (2) on the formed anode aluminum foil (1) by chemical polymerization, wherein the chemical polymerization comprises:
impregnating the anode aluminum foil (1) in a reducing solution for 0.3-3 min and drying the anode aluminum foil (1);
impregnating the anode aluminum foil (1) in an oxidizing solution for 0.3-3 min and drying the anode aluminum foil (1); and
repeating the above steps 1-5 times;
preparing a second conductive polymer layer (3) by impregnation in a dispersion of small-size particles;
preparing a third conductive polymer layer (4) by impregnation in a dispersion of particles larger than those for the preparation of the second conductive layer;
preparing a fourth conductive polymer layer (5) by electrochemical polymerization;
preparing a carbon paste layer (6) and a silver paste layer (7) on the anode aluminum foil (1); and
subjecting the resulting product to stacking, packaging, aging and sorting.

2. The method according to claim 1, **characterized in that** the first conductive polymer layer (2) comprises polypyrrole, polythiophene, polyaniline and derivatives and copolymers thereof.

3. The method according to claim 1, **characterized in that** the reducing solution is composed of a monomer, a dopant and a solvent; the monomer is one compound selected from pyrrole, thiophene, aniline and derivatives thereof; the dopant is one compound selected from compounds having a sulfonic acid group and compounds having a carboxyl group; and a concentration of the dopant is 0.01-1 mol/L.

4. The method according to claim 3, **characterized in that** the solvent of the reducing solution is water, an organic solvent or a mixture thereof; and the organic solvent is one of methanol, ethanol, propanol and butanol.

5. The method according to claim 1, **characterized in that** the oxidizing solution comprises an oxidizing agent; the oxidizing agent is one of ferric *p*-toluenesulfonate, ammonium persulfate, potassium permanganate, perchloric acid and hydrogen peroxide, and has a mass concentration of 0.5%-20%; a solvent of the oxidizing solution is water, an organic solvent or a mixture thereof; and the organic solvent is one of methanol, ethanol, propanol and butanol.

6. The method according to claim 1, **characterized in that** the step of preparing the second conductive polymer layer (3) by impregnation comprises:
impregnating the anode aluminum foil (1) in a dispersion and drying the anode aluminum foil (1); and repeating the above steps 2-15 times;
wherein a solute of the dispersion is polypyrrole, polythiophene, polyaniline, a derivative or a copolymer thereof; and
suspended polymer particles in the dispersion have a particle size of less than 100 nm.

7. The method according to claim 1, **characterized in that** the step of preparing the third conductive polymer layer (4) by impregnation comprises:
impregnating the anode aluminum foil (1) in a dispersion and drying the anode aluminum foil (1); and repeating the above steps 1-3 times;
wherein a solute of the dispersion is polypyrrole, polythiophene, polyaniline or a derivative thereof; and
suspended polymer particles have a particle size of less than 500 nm.

8. The method according to claim 1, **characterized in that** the step of preparing the fourth conductive polymer layer (5) by electrochemical polymerization comprises:
subjecting the anode aluminum foil (1) to a constant current or voltage;
wherein the constant current for the electrochemical polymerization is 0.1-10 mA; the constant voltage for the electrochemical polymerization is 0.01-2.5 V; a time for the electrochemical polymerization is 1-200 min; and a temperature of a polymerizing solution is 4-30°C.

9. The method according to claim 8, **characterized in that** the polymerizing solution is composed of a monomer, a dopant and a solvent;
wherein the monomer is pyrrole or thiophene, and has a mass percentage of 1-15%;
the dopant is a compound having a sulfonic acid group or a carboxyl group, or a derivative or a salt thereof, and has a concentration of 0.1-3 mol/L; and
the solvent is water, an organic solvent or a mixture thereof.

## Patentansprüche

1. Verfahren zur Herstellung eines festen Aluminium-Elektrolytkondensators, umfassend:
Schneiden einer Anoden-Aluminiumfolie (1) auf eine bestimmte Breite;
Schweißen der geschnittenen Anoden-Aluminiumfolie (1) an einen Streifen aus rostfreiem Stahl und Auftragen eines isolierenden Klebstoffs, um eine Anodenzone von einer Kathodenzone zu trennen;
Bilden der geschnittenen Anoden-Aluminiumfolie (1);
Herstellen einer ersten leitfähigen Polymerschicht (2) auf der gebildeten Anoden-Aluminiumfolie (1) durch chemische Polymerisation, wobei die chemische Polymerisation umfasst:
Imprägnieren der Anoden-Aluminiumfolie (1) in einer reduzierenden Lösung für 0,3-3 min und Trocknen der Anoden-Aluminiumfolie (1);
Imprägnieren der Anoden-Aluminiumfolie (1) in einer oxidierenden Lösung für 0,3-3 min und Trocknen der Anoden-Aluminiumfolie (1); und
Wiederholen der obigen Schritte 1-5 Mal;
Herstellen einer zweiten leitfähigen Polymerschicht (3) durch Imprägnierung in einer Dispersion von kleinen Teilchen;
Herstellen einer dritten leitfähigen Polymerschicht (4) durch Imprägnierung in einer Dispersion von Teilchen, die größer sind als die Teilchen für die Herstellung der zweiten leitfähigen Polymerschicht;
Herstellen einer vierten leitfähigen Polymerschicht (5) durch elektrochemische Polymerisation;
Herstellen einer Kohlenstoffpastenschicht (6) und einer Silberpastenschicht (7) auf der Anoden-Aluminiumfolie (1); und
Stapeln, Verpacken, Altern und Sortieren des resultierenden Produkts.

2. Verfahren nach Anspruch 1, **dadurch gekennzeichnet, dass** die erste leitfähige Polymerschicht (2) Polypyrrol, Polythiophen, Polyanilin und Derivate und Copolymere davon umfasst.

3. Verfahren nach Anspruch 1, **dadurch gekennzeichnet, dass** die reduzierende Lösung aus einem Monomer, einem Dotierungsmittel und einem Lösungsmittel besteht; wobei das Monomer eine Verbindung ist, die aus Pyrrol, Thiophen, Anilin und Derivaten davon ausgewählt ist; wobei das Dotierungsmittel eine Verbindung ist, die aus Verbindungen mit einer Sulfonsäuregruppe und Verbindungen mit einer Carboxylgruppe ausgewählt ist; und wobei die Konzentration des Dotierungsmittels 0,01-1 mol/L beträgt.

4. Verfahren nach Anspruch 3, **dadurch gekennzeichnet, dass** das Lösungsmittel der reduzierenden Lösung Wasser, ein organisches Lösungsmittel oder ein Gemisch davon ist; wobei das organische Lösungsmittel eines von Methanol, Ethanol, Propanol und Butanol ist.

5. Verfahren nach Anspruch 1, **dadurch gekennzeichnet, dass** die Oxidationslösung ein Oxidationsmittel umfasst; wobei das Oxidationsmittel eines von Eisen(III)-*p*-Toluolsulfonat, Ammoniumpersulfat, Kaliumpermanganat, Perchlorsäure und Wasserstoffperoxid ist und eine Massenkonzentration von 0,5 bis 20 % hat; wobei ein Lösungsmittel der Oxidationslösung Wasser, ein organisches Lösungsmittel oder eine Mischung davon ist; und wobei das organische Lösungsmittel eines von Methanol, Ethanol, Propanol und Butanol ist.

6. Verfahren nach Anspruch 1, **dadurch gekennzeichnet, dass** der Schritt des Herstellen der zweiten leitfähigen Polymerschicht (3) durch Imprägnierung umfasst:
Imprägnieren der Anoden-Aluminiumfolie (1) in einer Dispersion und Trocknen der Anoden-Aluminiumfolie (1); und Wiederholen der obigen Schritte 2-15 Mal;
wobei ein gelöster Stoff der Dispersion Polypyrrol, Polythiophen, Polyanilin, ein Derivat oder ein Copolymer davon ist; und
wobei die suspendierten Polymerteilchen in der Dispersion eine Teilchengröße von weniger als 100 nm haben .

7. Verfahren nach Anspruch 1, **dadurch gekennzeichnet, dass** der Schritt des Herstellen der dritten leitfähigen Polymerschicht (4) durch Imprägnierung umfasst:
Imprägnieren der Anoden-Aluminiumfolie (1) in einer Dispersion und Trocknen der Anoden-Aluminiumfolie (1); und Wiederholen der obigen Schritte 1-3 Mal;
wobei ein gelöster Stoff der Dispersion Polypyrrol, Polythiophen, Polyanilin oder ein Derivat davon ist; und
wobei die suspendierten Polymerteilchen eine Teilchengröße von weniger als 500 nm haben .

8. Verfahren nach Anspruch 1, **dadurch gekennzeichnet, dass** der Schritt des Herstellen der vierten leitfähigen Polymerschicht (5) durch elektrochemische Polymerisation umfasst:
Beaufschlagung der Anoden-Aluminiumfolie (1) mit einem konstanten Strom oder einer konstanten Spannung;
wobei der konstante Strom für die elektrochemische Polymerisation 0,1-10 mA beträgt; wobei die konstante Spannung für die elektrochemische Polymerisation 0,01-2,5 V beträgt;
wobei eine Zeit für die elektrochemische Polymerisation 1-200 min beträgt; und wobei eine Temperatur einer Polymerisationslösung 4-30°C beträgt.

9. Verfahren nach Anspruch 8, **dadurch gekennzeichnet, dass** die Polymerisationslösung aus einem Monomer, einem Dotierungsmittel und einem Lösungsmittel besteht;
wobei das Monomer Pyrrol oder Thiophen ist und einen Massenanteil von 1-15 % hat;
wobei das Dotierungsmittel eine Verbindung mit einer Sulfonsäuregruppe oder einer Carboxylgruppe oder ein Derivat oder ein Salz davon ist und eine Konzentration von 0,1 bis 3 mol/l hat; und
wobei das Lösungsmittel Wasser, ein organisches Lösungsmittel oder eine Mischung davon ist.

## Revendications

1. Procédé de fabrication d'un condensateur électrolytique solide en aluminium, comprenant:
couper une feuille d'aluminium d'anode (1) à une largeur;
souder ladite feuille d'aluminium d'anode coupée (1) sur une bande d'acier inoxydable, et enduire d'un adhésif isolant pour séparer une zone d'anode d'une zone de cathode;
former ladite feuille d'aluminium d'anode coupée (1);
préparer une première couche de polymère conducteur (2) sur ladite feuille d'aluminium d'anode formée (1) par polymérisation chimique, dans lequel ladite polymérisation chimique comprend :
imprégner ladite feuille d'aluminium d'anode (1) dans une solution réductrice pendant 0,3 à 3 min et sécher ladite feuille d'aluminium d'anode (1);
imprégner ladite feuille d'aluminium d'anode (1) dans une solution oxydante pendant 0,3 à 3 minutes et sécher ladite feuille d'aluminium d'anode (1); et
répéter les étapes ci-dessus 1 à 5 fois;
préparer une deuxième couche de polymère conducteur (3) par imprégnation dans une dispersion de particules de petite taille;
préparer une troisième couche de polymère conducteur (4) par imprégnation dans une dispersion de particules plus grosses que celles pour ladite préparation de ladite deuxième couche conductrice;
préparer une quatrième couche de polymère conducteur (5) par polymérisation électrochimique;
préparer une couche de pâte de carbone (6) et une couche de pâte d'argent (7) sur ladite feuille d'aluminium d'anode (1); et
soumettre ledit produit résultant à un empilement, un emballage, un vieillissement et un tri.

2. Ledit procédé selon la revendication 1, **caractérisé en ce que** ladite première couche de polymère conducteur (2) comprend du polypyrrole, du polythiophène, de la polyaniline et leurs dérivés et copolymères.

3. Ledit procédé selon la revendication 1, **caractérisé en ce que** ladite solution réductrice est composée d'un monomère, d'un dopant et d'un solvant; ledit monomère est un composé choisi parmi le pyrrole, le thiophène, l'aniline et leurs dérivés; ledit dopant est un composé choisi parmi les composés ayant un groupe acide sulfonique et les composés ayant un groupe carboxyle; et une concentration dudit dopant est de 0,01-1 mol/L.

4. Ledit procédé selon la revendication 3, **caractérisé en ce que** ledit solvant de ladite solution réductrice est l'eau, un solvant organique ou un mélange de ceux-ci; et ledit solvant organique est l'un parmi le méthanol, l'éthanol, le propanol et le butanol.

5. Ledit procédé selon la revendication 1, **caractérisé en ce que** ladite solution oxydante comprend un agent oxydant; ledit agent oxydant est l'un parmi le *p*-toluènesulfonate ferrique, le persulfate d'ammonium, le permanganate de potassium, l'acide perchlorique et le peroxyde d'hydrogène, et a une concentration en masse de 0,5 % à 20 %; un solvant de ladite solution oxydante est l'eau, un solvant organique ou un mélange de ceux-ci; et ledit solvant organique est l'un parmi le méthanol, l'éthanol, le propanol et le butanol.

6. Ledit procédé selon la revendication 1, **caractérisé en ce que** l'étape de préparation de ladite deuxième couche de polymère conducteur (3) par imprégnation comprend :
imprégner ladite feuille d'aluminium d'anode (1) dans une dispersion et sécher ladite feuille d'aluminium d'anode (1); et répéter les étapes ci-dessus 2 à 15 fois;
dans laquelle un soluté de ladite dispersion est le polypyrrole, le polythiophène, la polyaniline, un dérivé ou un copolymère de ceux-ci; et
particules de polymère en suspension dans ladite dispersion ont une granulométrie inférieure à 100 nm.

7. Ledit procédé selon la revendication 1, **caractérisé en ce que** l'étape de préparation de ladite troisième couche de polymère conducteur (4) par imprégnation comprend:
imprégner ladite feuille d'aluminium d'anode (1) dans une dispersion et sécher ladite feuille d'aluminium d'anode (1); et répéter les étapes ci-dessus 1 à 3 fois;
dans laquelle un soluté de ladite dispersion est le polypyrrole, le polythiophène, la polyaniline ou un dérivé de ceux-ci; et
particules de polymère en suspension ont une granulométrie inférieure à 500 nm.

8. Ledit procédé selon la revendication 1, **caractérisé en ce que** l'étape de préparation de ladite quatrième couche de polymère conducteur (5) par polymérisation électrochimique comprend :
soumettre ladite feuille d'aluminium d'anode (1) à un courant ou à une tension constante;
dans lequel ledit courant constant pour ladite polymérisation électrochimique est de 0,1 à 10 mA; ladite tension constante pour ladite polymérisation électrochimique est de 0,01 à 2,5 V; un temps pour ladite polymérisation électrochimique est de 1 à 200 min; et une température d'une solution de polymérisation est de 4 à 30°C.

9. Ledit procédé selon la revendication 8, **caractérisé en ce que** ladite solution polymérisante est composée d'un monomère, d'un dopant et d'un solvant;
dans lequel ledit monomère est le pyrrole ou le thiophène, et a un pourcentage en masse de 1 à 15 %;
ledit dopant est un composé ayant un groupe acide sulfonique ou un groupe carboxyle, ou un dérivé ou un sel de celui-ci, et a une concentration de 0,1-3 mol/L; et
ledit solvant est l'eau, un solvant organique ou un mélange de ceux-ci.
